# EUROPEAN PATENT SPECIFICATION

(11) **EP 3 856 696 B1**
(45) Date of publication and mention of the grant of the patent: **29.04.2026**
(21) Application number: 19778506.6
(22) Date of filing: 26.09.2019
(51) Int. Cl.: C03C 14/00, C08K 3/24, G02B 1/04, C08L 33/12

(54) **COMPOSITION COMPRISING SCATTERING PARTICLES**
ZUSAMMENSETZUNG MIT LICHTSTREUENDEN PARTIKELN
COMPOSITION COMPRENANT DES PARTICULES DIFFUSANTES

(30) Priority: 26.09.2018 FR 1858835
(43) Date of publication of application: 04.08.2021
(73) Proprietor: Trinseo Europe GmbH, 8808 Pfaeffikon (CH)
(72) Inventor: TOMBOLATO, Sylvain, 64170 LACQ (FR); MACY, Noah, ROYERSFORD, ROYERSFORD PA, 19468 (US)
(74) Representative: SSM Sandmair
(86) International application number: PCT/EP2019/076098
(87) International publication number: WO 2020/064957

(56) References cited:
- EP-A2- 1 864 274
- US-A1- 2008 012 032
- US-A1- 2009 326 120
- US-A1- 2017 059 982
- US-A1- 2018 052 260
- DATABASE WPI Week 201829, Derwent World Patents Index; AN 2018-271238, XP002792929
- DATABASE WPI Week 200756, Derwent World Patents Index; AN 2007-586561, XP002792930
- DATABASE WPI Week 200276, Derwent World Patents Index; AN 2002-702152, XP002792931
- NAGAO D; KINOSHITA T; WATANABE A; KONNO M: "Fabrication of highly refractive, transparent BaTiO3/poly(methyl methacrylate) composite films with high permittivities", POLYMER INTERNATIONAL, vol. 60, no. 8, 24 March 2011 (2011-03-24), pages 1180 - 1184, XP002792932
- TAKAYUKI KOMATSU ET AL: "PREPARATION AND OPTICAL PROPERTIES OF TRANSPARENT TEO2-BASED GLASSES CONTAINING BATIO3 CRYSTALS", JOURNAL OF THE CERAMIC SOCIETY OF JAPAN, INTERNATIONAL EDITION, FUJI TECHNOLOGY PRESS, TOKYO, JP, vol. 101, no. 1, 1 January 1993 (1993-01-01), pages 46 - 50, XP000378202, ISSN: 0912-9200
- STEFANESCU E A ET AL: "Multifunctional PMMA-Ceramic composites as structural dielectrics", POLYMER, ELSEVIER SCIENCE PUBLISHERS B.V, GB, vol. 51, no. 24, 12 November 2010 (2010-11-12), pages 5823 - 5832, XP027477319, ISSN: 0032-3861, [retrieved on 20100918], DOI: 10.1016/J.POLYMER.2010.09.025

## Description

### [Field of the invention]

The present invention relates to a composition comprising scattering particles.

In particular, the present invention relates to polymeric composition comprising scattering particles for lightning applications or light guides. The invention also relates to a process for manufacturing such a polymeric composition comprising scattering particles for lightning applications or light guides.

More particularly the present invention relates to a polymeric (meth)acrylic composition comprising inorganic scattering particles for lightning applications or light guides.

### [Technical problem]

Transparent materials are widely used for lightning applications. In order to also diffuse light these transparent materials comprise scattering particles.

Light guides or light guide bodies are for example in form of sheets or wedges. They often have a light source that enters the light perpendicular to the light emitting surface, but the light can be entered also by other means.

As the light sources differs, either from technology of the light source or wavelength of the emitted light, it is difficult to have a good homogenous scattered light.

Additionally the intensity of the scattered light, the homogeneity of the transmission, both are influenced by choice of scattering particles.

The objective of the present invention is to obtain a composition comprising scattering particles that has a sufficient transparency while diffusing the light, especially in light guide bodies, for having also a sufficient luminous intensity.

An objective of the present invention is also to have a composition comprising particles and having a light transmission that is homogenous, meaning that the light transmission does not varies in an important matter as function of the wavelength of the visible light.

Another objective of the present invention is to provide light guides or light guide bodies having a light transmission that is homogenous, meaning that the light transmission does not varies in an important matter as function of the wavelength of the visible light.

Still an additional objective is having a process for preparing a composition comprising scattering particles that has a sufficient transparency while diffusing the light, especially in light guide bodies, for having also a sufficient luminous intensity.

Still a further objective is the use of the composition comprising comprising scattering particles that has a sufficient transparency while diffusing the light, especially in light guide bodies, for having also a sufficient luminous intensity in lightning applications or light guides.

### [BACKGROUND OF THE INVENTION] Prior art

The document EP1864274 discloses a luminous device comprising at least one light-emitting diode and at least one cover made of a transparent plastic in which particles that scatter the light emitted by the light-emitting diode are dispersed. the scattering particles must have a mean diameter of between 0.5 and 100 µm and scattering particles polyamide particles, PTFE particles, crosslinked styrene-based particles, methyl-methacrylate-based crosslinked particles or silicone particles are BaSO₄, TiO₂, ZnO, CaCO₃, MgO or Al₂O₃ particles or hollow glass microspheres.

The document DE102012216081 discloses the manufacturing of a light diffusing molded part by injection molding. The composition for injection molding comprises a matrix of polymethyl methacrylate and spherical plastic particles with a particle size of 1 to 24µm.

The document WO2004/034136 discloses a bulk diffuser for a flat panel display. The bulk light diffuser material may be a sheet or film comprising of polycarbonate and a particulate light diffusing component. PMMA and silicone particles are used in the examples.

The document WO2011/0124412 discloses light guide bodies having improved luminous intensity and transparency. The light guide bodies consist of polymethyl methacrylate and 0.1 to 100wt ppm of titanium dioxide particles with an average particle size of 150-500 nm.

The document WO 2007/058060 A1 discloses a light guide plate of a surface light source device of edge-light type in which a light source is disposed on a side surface of the plate. The light guide is formed of a transparent thermoplastic resin containing particles.
The document US 2009/0326120 A1 discloses a flame retardant and light diffusing polycarbonate resin composition comprising 100 parts by weight of a polycarbonate resin (A), 0.1 to 6 parts by weight of a light diffusing agent (B) with an average particle diameter of 1 to 10 µm, 0.03 to 1 part by weight of a light storing agent (C) with an average particle diameter of 1 to 20 µm and 0.03 to 1.5 parts by weight of a silicone compound (D) wherein the silicone compound (D) has a branched main chain structure and contains organic functional groups and the presence of aromatic groups is essential as the organic functional groups but the presence of hydrocarbon groups other than aromatic groups is optional as the organic functional groups other than terminal groups.

None of the prior art documents discloses a composition as claimed comprising especially the inorganic particles of the current invention or its use or light guide comprising it.

### [Brief description of the invention]

The invention is set out in the appended independent claims. The dependent claims describe advantageous embodiments.

Surprisingly it has been found that a composition C1 comprising
a) a transparent material M1 and,
b) inorganic particles P1 comprises an inorganic compound either of the formula ABₓC₁₋ₓX₃, wherein x is from 0 to 1 and A, B, and C are cations and X is an anion; or inorganic particle P1 comprises an inorganic compound the formula A'_{1-y}A"_{y}CX₃ , wherein y is from 0 to 1 and A', A", and C are cations and X is an anion; or inorganic particle P1 comprises an inorganic compound the formula A'_{1-y} A"_{y}BₓC₁₋ₓX₃ , wherein x is from 0 to 1, y is from 0 to 1 and A', A", B, and C are cations and X is an anion, said particles are having a weight average particle diameter between 1nm and 1µm,
characterized in that the particles P1 represents between 0.1ppm and 1000ppm of the composition C1 comprising the components a) and b), yields to a composition that possesses homogenous light transmission.

Surprisingly it has also been found that a polymeric composition comprising
a) a transparent material M1 and,
b) inorganic particles P1 comprises an inorganic compound either of the formula ABₓC₁₋ₓX₃, wherein x is from 0 to 1 and A, B, and C are cations and X is an anion; or inorganic particle P1 comprises an inorganic compound the formula A'_{1-y}A"_{y}CX₃ , wherein y is from 0 to 1 and A', A", and C are cations and X is an anion; or inorganic particle P1 comprises an inorganic compound the formula A'_{1-y} A"_{y}BₓC₁₋ₓX₃ , wherein x is from 0 to 1, y is from 0 to 1 and A', A", B, and C are cations and X is an anion, said particles are having a weight average particle diameter between 1nm and 1µm,
characterized in that the particles P1 represents between 0.1ppm and 1000ppm of the composition C1 comprising the components a) and b), can be used in lightning applications as a composition that possesses homogenous light transmission.

Surprisingly it has also been found that a process for manufacturing a composition C1 comprising the steps of:
a) providing inorganic particles P1 comprises an inorganic compound either of the formula ABₓC₁₋ₓX₃, wherein x is from 0 to 1 and A, B, and C are cations and X is an anion; or inorganic particle P1 comprises an inorganic compound the formula A'_{1-y}A"_{y}CX₃ , wherein y is from 0 to 1 and A', A", and C are cations and X is an anion; or inorganic particle P1 comprises an inorganic compound the formula A'_{1-y} A"_{y}BₓC₁₋ₓX₃ , wherein x is from 0 to 1, y is from 0 to 1 and A', A'', B, and C are cations and X is an anion, said particles are having a weight average particle diameter between 1nm and 1µm,
b) incorporating the particles P1 in a transparent material M1;
characterized in that the particles P1 represents between 0.1ppm and 100 ppm of the composition C1 comprising the components a) and b); yields to a composition C1 that possesses homogenous light transmission.

Surprisingly it has also been found that article comprising a composition C1, said composition C1 comprises
a) a transparent material M1 and,
b) inorganic particles P1 comprises an inorganic compound either of the formula ABₓC₁₋ₓX₃, wherein x is from 0 to 1 and A, B, and C are cations and X is an anion; or inorganic particle P1 comprises an inorganic compound the formula A'_{1-y}A"_{y}CX₃ , wherein y is from 0 to 1 and A', A", and C are cations and X is an anion; or inorganic particle P1 comprises an inorganic compound the formula A'_{1-y} A"_{y}BₓC₁₋ₓX₃ , wherein x is from 0 to 1, y is from 0 to 1 and A', A", B, and C are cations and X is an anion, said particles are having a weight average particle diameter between 1nm and 1µm,
characterized in that the particles P1 represents between 0.1ppm and 1000ppm of the composition C1 comprising the components a) and b),
yields to an article that possesses homogenous light transmission.

### [Detailed description of the invention]

According to a first aspect, the present invention relates to a composition C1 comprising
a) a transparent material M1 and,
b) inorganic particles P1 comprising an inorganic compound either of the formula ABₓC₁₋ₓX₃, wherein x is from 0 to 1 and A, B, and C are cations and X is an anion; or inorganic particle P1 comprises an inorganic compound the formula A'_{1-y}A"_{y}CX₃ , wherein y is from 0 to 1 and A', A", and C are cations and X is an anion; or inorganic particle P1 comprises an inorganic compound the formula A'_{1-y}A"_{y}BₓC₁₋ₓX₃ , wherein x is from 0 to 1, y is from 0 to 1 and A', A", B, and C are cations and X is an anion, said particles are having a weight average particle diameter between 1nm and 1µm,
wherein the composition C1 comprises between 0.1ppm and 100ppm by weight of the inorganic particles P1 in the composition C1 calculated on the components a) and b).

According to a second aspect, the present invention relates to the use of a composition C1 comprising
a) a transparent material M1 and,
b) inorganic particles P1 comprising an inorganic compound either of the formula ABₓC₁₋ₓX₃, wherein x is from 0 to 1 and A, B, and C are cations and X is an anion; or inorganic particle P1 comprises an inorganic compound the formula A'_{1-y}A"_{y}CX₃ , wherein y is from 0 to 1 and A', A", and C are cations and X is an anion; or inorganic particle P1 comprises an inorganic compound the formula A'_{1-y}A"_{y}BₓC₁₋ₓX₃ , wherein x is from 0 to 1, y is from 0 to 1 and A', A", B, and C are cations and X is an anion, said particles are having a weight average particle diameter between 1nm and 1µm,
wherein the composition C1 comprises between 0.1ppm and 100ppm by weight of the inorganic particles P1 in the composition C1 calculated on the components a) and b).

In a third aspect the present invention relates to a process for manufacturing a composition C1 comprising the steps of:
a) providing inorganic particles P1 comprising an inorganic compound either of the formula ABₓC₁₋ₓX₃, wherein x is from 0 to 1 and A, B, and C are cations and X is an anion; or inorganic particle P1 comprises an inorganic compound the formula A'_{1-y}A"_{y}CX₃ , wherein y is from 0 to 1 and A', A", and C are cations and X is an anion; or inorganic particle P1 comprises an inorganic compound the formula A'_{1-y} A"_{y}BₓC₁₋ₓX₃ , wherein x is from 0 to 1, y is from 0 to 1 and A', A'', B, and C are cations and X is an anion, said particles are having a weight average particle diameter between 1nm and 1µm,
b) incorporating the particles P1 in a transparent material M1;
wherein the composition C1 comprises between 0.1ppm and 100ppm by weight of the inorganic particles P1 in the composition C1 calculated on the components a) and b).

In a fourth aspect the present invention relates to a process for manufacturing an article for lightning applications comprising the steps of
a) providing a composition C1 as defined before,
b) transforming the composition C1.

In a fifth aspect the present invention relates to an article comprising a composition C1, said composition C1 comprises
a) a transparent material M1 and,
b) inorganic particles P1 comprising an inorganic compound either of the formula ABₓC₁₋ₓX₃, wherein x is from 0 to 1 and A, B, and C are cations and X is an anion; or inorganic particle P1 comprises an inorganic compound the formula A'_{1-y}A"_{y}CX₃ , wherein y is from 0 to 1 and A', A", and C are cations and X is an anion; or inorganic particle P1 comprises an inorganic compound the formula A'_{1-y}A"_{y}BₓC₁₋ₓX₃ , wherein x is from 0 to 1, y is from 0 to 1 and A', A", B, and C are cations and X is an anion, said particles are having a weight average particle diameter between 1nm and 1µm,
wherein the composition C1 comprises between 0.1ppm and 100ppm by weight of the inorganic particles P1 in the composition C1 calculated on the components a) and b).

By the term "particle" as used is denoted a more or less spherical polymer comprising particle or inorganic particle in the nanometer range. Preferably the particle has a weight average particle size between 2nm and 1000nm. By

By the term "particle size" as used is denoted the weight average diameter of a particle considered as spherical (equivalent sphere having same weight or volume, both connected via density).

By the term "copolymer" as used is denoted that the polymer consists of at least two different monomers.

By the term "(meth)acrylic monomer" as used is denoted all kind of acrylic and methacrylic monomers.

By the term "(meth)acrylic polymer" as used is denoted that the (meth)acrylic) polymer comprises essentially polymers comprising (meth)acrylic monomers that make up 50wt% or more of the (meth)acrylic polymer.

By the term "transparent" as used is denoted that the respective material has a light transmittance according to ASTM D-1003 (sheet of 3mm thickness) of at least 85%.

By saying that a range from x to y in the present invention, it is meant that the upper and lower limit of this range are included, equivalent to at least x and up to y.

By saying that a range is between x and y in the present invention, it is meant that the upper and lower limit of this range are excluded, equivalent to more than x and less than y.

**With regard to the composition C1 of the invention,** it comprises a) transparent material M1 and b) inorganic particles P1 comprising a an inorganic compound either of the formula ABₓC₁₋ₓX₃, wherein x is from 0 to 1 and A, B, and C are cations and X is an anion; or inorganic particle P1 comprises an inorganic compound the formula A'_{1-y}A"_{y}CX₃ , wherein y is from 0 to 1 and A', A", and C are cations and X is an anion; or inorganic particle P1 comprises an inorganic compound the formula A'_{1-y} A"_{y}BₓC₁₋ₓX₃ , wherein x is from 0 to 1, y is from 0 to 1 and A', A", B, and C are cations and X is an anion; said particles are having a weight average particle diameter between 1nm and 1µm.

Preferably the numbers x and y in the formulas are a rational number from 0 to 1.

According to the inventionthe composition C1 comprises between 0.1ppm and 100ppm by weight of the inorganic particles P1 in the composition C1 calculated on the components a) and b).

In a more preferred embodiment the composition C1 comprises between 1ppm and 5ppm by weight of the inorganic particles P1 in the composition C1 calculated on the components a) and b).

The composition C1 can comprise also other compounds, which are not taken into account for the calculation of the weight ratios between the two compounds a) and b).

The composition C1 can comprise for example impact modifiers, colorants.

**With regard to the transparent material M1,** it is chosen from glass or transparent polymers.

In a first preferred embodiment the transparent material M1 is a transparent polymer P1. The polymer P1 can be thermoplastic polymer or thermoset polymer. In case of the thermoplastic polymer it is also considered as part of the invention that the thermoplastic polymer can be crosslinked or slightly crosslinked as long as a piece of this polymer can still be formed and change shape, as for example by thermoforming.

The transparent polymer P1 can be chosen from (meth) acrylic polymers, polycarbonate, polystyrenes, polyesters, polyvinylchloride (PCV), cyclic olefin copolymers, styrene methyl methacrylate (SMMA), styrene acrylonitrile (SAN), polyvinylidene fluoride (PVDF) and blends thereof.

In a first preferred embodiment the transparent polymer P1 is a composition comprising at least 50wt% of a (meth)acrylic polymer composition MPCo, preferably at least 60wt% and more preferably at least 70wt%.

In a second preferred embodiment the transparent polymer P1 is a (meth)acrylic polymer composition MPCo.

The (meth)acrylic polymer composition MPCo can be chosen from a (meth)acrylic block copolymer or a (meth)acrylic polymer MP1 or a crosslinked (meth) acrylic composition MCX.

**With regard to the** (meth)acrylic polymer MP1 it is a polymeric polymer chain comprising at least 50wt% of monomers coming acrylic and/or methacrylic monomers. The (meth)acrylic polymer MP1 could also be a mixture of two or more (meth)acrylic polymer AP1 to APx.

The acrylic and/or methacrylic monomers are chosen from acrylic acid, methacrylic acid, esters of acrylic acid of esters of methacrylic acid, alkyl acrylic monomers, alkyl methacrylic monomers and mixtures thereof.

Preferably the monomer is chosen from acrylic acid, methacrylic acid, alkyl acrylic monomers, alkyl methacrylic monomers and mixtures thereof, the alkyl group having from 1 to 22 carbons, either linear, branched or cyclic; preferably the alkyl group having from 1 to 12 carbons, either linear, branched or cyclic.

Advantageously the (meth)acrylic monomer is chosen from methyl methacrylate, ethyl methacrylate, methyl acrylate, ethyl acrylate, methacrylic acid, acrylic acid, n-butyl acrylate, iso-butyl acrylate, n- butyl methacrylate, iso-butyl methacrylate, cyclohexyl acrylate, cyclohexyl methacrylate, isobornyl acrylate, isobornyl methacrylate and mixtures thereof.

Other comonomers can be copolymerized with the acrylic and/or methacrylic monomers as long as the (meth)acrylic polymer AP1 is comprising at least 50wt% of monomers coming acrylic and/or methacrylic monomers in its polymeric chain. The other comonomers can be chosen from styrenic monomers as styrene or styrene deriviatives, acrylonitrile, vinylesters as vinylacetate. The amount of these comonomers is from 0wt% to 50wt%, preferably from 0wt% to 40wt%, more preferably from 0wt% to 30wt%, advantageously from 0wt% to 20wt%.

In a first more preferred embodiment the (meth)acrylic polymer MP1 is a thermoplastic homo- or copolymer of methyl methacrylate (MMA) that comprises at least 50%, preferably at least 60%, advantageously at least 70% and more advantageously at least 80% by weight of methyl methacrylate.

The copolymer of methyl methacrylate (MMA) comprises between 50% and 99.9% by weight of methyl methacrylate and between 0.1 and 50% by weight of at least one monomer having at least one ethylenic unsaturation that can copolymerize with methyl methacrylate.

These monomers are well known and mention may be made, in particular of acrylic and methacrylic acids and alkyl-(meth)acrylates in which the alkyl group has from 1 to 12 carbon atoms. As examples, mention may be made of methyl acrylate and ethyl, butyl or 2-ethylhexyl (meth)acrylate. Preferably the comonomer is an alkyl acrylate in which the alkyl group having from 1 to 4 carbon atoms.

According to the first more preferred embodiment the copolymer of methyl methacrylate (MMA) comprises from 60% to 99.9% advantageously from 70% to 99.9% and more advantageously from 80% to 99.9% by weight of methyl methacrylate and from 0.1% to 40% advantageously from 0.1% to 30% and more advantageously from 0.1% to 20% by weight of at least one monomer having at least one ethylenic unsaturation that can copolymerize with methyl methacrylate. Preferably the comonomer is chosen from methyl acrylate or ethyl acrylate or mixtures thereof.

The (meth)acrylic polymer MP1can optionally have a melt flow index (MFI) according to ISO 1133 (230°C/3.8kg) between 0.1g/10min and 20 g/10min. Preferably melt flow index can be between 0.2 g/10min and 18g/10min, more preferably between 0.3g/10min and 16g/10min, advantageously between 0.4g/10min and 13g/10min.

The (meth)acrylic polymer MP1 has a refractive index between 1.46- and 1.52, preferably between 1.47 and 1.52 and more preferably between 1.48 and 1.52.

The (meth)acrylic polymer MP1 has a light transmittance according to ASTM D-1003 (sheet of 3mm thickness) of at least 85%, preferably 86%, more preferably 87%.

The (meth)acrylic polymer MP1 has a Vicat softening temperature of at least 90°C. The Vicat softening temperature is measured according to ISO 306:2013 (B50 method).

The composition according to the invention can comprise beside the (meth)acrylic polymer MP1 also an (meth)acrylic polymer MP2. The (meth)acrylic polymer MP1 and (meth)acrylic polymer MP2 form a mixture or a blend. This mixture or blend consists of at least one homopolymer and at least one copolymer of MMA, or a mixture of at least two homopolymers or two copolymers of MMA with a different average molecular weight or a mixture of at least two copolymers of MMA with a different monomer composition.

In a second more preferred embodiment the (meth)acrylic polymer MP1 is crosslinked homo- or copolymer of methyl methacrylate (MMA) that comprises at least 50%, preferably at least 60%, advantageously at least 70% and more advantageously at least 80% by weight of methyl methacrylate.

The (meth)acrylic polymer MP1 of the second preferred embodiment comprises as well as crosslinker. Preferably the crosslinker is a copolymerzable compound having at least two double bonds.

In a third more preferred embodiment the (meth)acrylic polymer composition MPCo is a (meth)acrylic block copolymer MBC of methyl methacrylate (MMA) that comprises at least 50% of methyl methacrylate.

The (meth)acrylic block copolymer MBC comprises at least one block having a glass transition temperature less than 20°C preferably less than 10°C more preferably less than 0°C, advantageously less than -5°C and more advantageously less than - 10°C.

Preferably (meth)acrylic block copolymer MBC comprises at least one block which is an (meth)acrylic block. By this is meant that at least 50wt% of the monomers inside this block are alkyl (meth)acrylate monomers, that have been polymerized.

Most preferably the (meth)acrylic block copolymer MBC comprises least 50wt% of the monomers inside (meth)acrylic block copolymer MBC are alkyl (meth) acrylate monomers, that have been polymerized.

The (meth)acrylic block copolymer MBC is having a general formula (A)ₙB in which:
- n is an integer of greater than or equal to 1,
- A is: an acrylic or methacrylic homo- or copolymer having a Tg of greater than 50°C, preferably of greater than 80°C, or polystyrene, or an acrylic/styrene or methacrylic/styrene copolymer. Preferably, A is chosen from methyl methacrylate (MMA), phenyl methacrylate, benzyl methacrylate or isobornyl methacrylate. Preferably, the block A is PMMA or PMMA modified with acrylic or methacrylic comonomers;
- B is an acrylic or methacrylic homo- or copolymer having a Tg of less than 20°C, preferably comprising monomers chosen of methyl acrylate, ethyl acrylate, butyl acrylate (BuA), ethylhexyl acrylate, styrene (Sty) or butyl methacrylate, more preferably butyl acrylate said monomers make up at least 50wt%, preferably 70wt% of B.

Advantageously the (meth)acrylic block copolymer MBC is amorphous.

Preferably, in the block A the monomer is chosen from methyl methacrylate (MMA), phenyl methacrylate, benzyl methacrylate, isobornyl methacrylate, styrene (Sty) or alpha -methylstyrene or mixtures thereof. More preferably, the block A is PMMA or PMMA copolymerized with acrylic or methacrylic comonomers or polystyrene (PS) or PS modified with styrenic comonomers.

Preferably the block B comprises monomers chosen of methyl acrylate, ethyl acrylate, butyl acrylate (BuA), ethylhexyl acrylate or butyl methacrylate and mixtures thereof, more preferably butyl acrylate said monomers make up at least 50wt%, preferably 70wt% of block B.

Furthermore, the blocks A and/or B can comprise other acrylic or methacrylic comonomers carrying various chemical function groups known to a person skilled in the art, for example acid, amide, amine, hydroxyl, epoxy or alkoxy functional groups. The block A can incorporate groups, such as acrylic acid or methacrylic acid (MAA), in order to increase the temperature stability of thereof.

Comonomers like styrene can also be incorporated in the block B in order to mismatch the refractive index of the block A.

Preferably, said thermoplastic acrylic block copolymer has a structure chosen from: ABA, AB, A₃B and A₄B.

The (meth)acrylic block copolymer MBC for example can be one of the following triblock copolymers: pMMA-pBuA-pMMA, p(MMAcoMAA)-pBuA-p(MMAcoMAA), p(MMAcoMAA)-p(BuAcoSty)-p(MMAcoMAA) and p(MMAcoAA)-pBuA-p(MMAcoAA). In a first preferred embodiment, the (meth)acrylic block copolymer MBC is p(MMAcoMAA)-p(BuAcoSty)-p(MMAcoMAA).

It is known to a person skilled in the art that the polymers of PMMA type can comprise small amounts of acrylate comonomer in order to improve the temperature stability thereof. By small is meant less than 9wt%, preferably less than 7wt% and more preferably less than 6wt% of the polymer.

The block B represents from 10% to 85%, preferably 15% to 80% of the total weight of the block copolymer MBC.

The block B has a weight-average molar mass of between 10 000 g/mol and 500 000 g/mol, preferably from 20 000 g/mol to 300 000 g/mol. The weight average molar mass can be measured by size exclusion chromatography (SEC).

The (meth)acrylic block copolymers can be obtained by controlled radical polymerization (CRP) or by anionic polymerization; the most suitable process according to the type of copolymer to be manufactured will be chosen.

Preferably, this will be CRP, in particular in the presence of nitroxides, for the (meth)acrylic block copolymers of (A)ₙB type and anionic or nitroxide radical polymerization, for the structures of ABA type, such as the triblock copolymer MAM. Controlled radical polymerization is described in the document for obtaining block copolymers, i.e. in WO03/062293.

The (meth)acrylic block copolymer MBC can be transformed by extrusion or injection molding in form of a object.

In a fourth more preferred embodiment the (meth)acrylic polymer composition MPCo is a crosslinked (meth) acrylic composition MCX. consisting of a brittle matrix (I) having a glass transition temperature Tg of greater than 0°C and of elastomeric domains having a characteristic dimension of less than 100 nm consisting of macromolecular sequences (II) having a flexible nature with a glass transition temperature of less than 0°C, characterized that the macromolecular sequences (II) having a flexible nature are having a weight average molecular weight Mw of between 150 000g/mol and 800 000 g/mol.

**As regards the matrix (I),** it exhibits an overall Tg of greater than 0°C, measured by differential scanning calorimetry (DSC), and is compatible with the methyl methacrylate homo- or copolymer. Preferably glass transition temperature Tg is greater than 10°C, more preferably greater than 20°C, still more preferably greater than 40°C even more preferably greater than 40°C, advantageously greater than 50°C and more advantageously greater than 60°C.

The matrix (I) is prepared from methyl methacrylate and optionally one or more monomer(s) Mo1 chosen from:
- acrylic monomers of formula CH₂=CH-C(=O)-O-R₁, where R₁ denotes a hydrogen atom or a linear, cyclic or branched C₁-C₄₀ alkyl group optionally substituted by a halogen atom or a hydroxyl, alkoxy, cyano, amino or epoxy group, such as, for example, acrylic acid, methyl acrylate, ethyl acrylate, propyl acrylate, n-butyl acrylate, isobutyl acrylate, tert-butyl acrylate, 2-ethylhexyl acrylate, glycidyl acrylate, hydroxyalkyl acrylates or acrylonitrile;
- methacrylic monomers of formula CH₂=C(CH₃)-C(=O)-O-R₂, where R₂ denotes a hydrogen atom or a linear, cyclic or branched C₁-C₄₀ alkyl group optionally substituted by a halogen atom or a hydroxyl, alkoxy, cyano, amino or epoxy group, such as, for example, methacrylic acid, methyl methacrylate, ethyl methacrylate, propyl methacrylate, n-butyl methacrylate, isobutyl methacrylate, tert-butyl methacrylate, 2-ethylhexyl methacrylate, glycidyl methacrylate, hydroxyalkyl methacrylates or methacrylonitrile;
- vinylaromatic monomers, such as, for example, styrene or substituted styrenes, such as α-methylstyrene, monochlorostyrene or tert-butylstyrene.

The comonomer(s) are chosen in nature and quantity that the lower limit of the glass transition temperature Tg is met.

Preferably methyl methacrylate is the predominant monomer in the polymer of the matrix (I). The matrix (I) thus includes a proportion of methyl methacrylate of from 51wt% to 100wt%, preferably between 75wt% and 100wt% and advantageously between 90wt% and 100wt%.

**As regards the macromolecular sequences (II)** having a flexible nature, said macromolecular sequences (II) they are also called block B in the present invention. These macromolecular sequences (II) having a flexible nature exhibit a glass transition temperature of less than 0°C (denoted Tg and measured by DSC). Preferably the Tg is less than -5°C, more preferably less than - 10°C and even more preferably less than -15°C.

Furthermore, the weight-average molecular weight of the macromolecular sequences (II) having a flexible nature with a glass transition temperature of less than 0°C is between 150 000 g/mol and 800 000 g/mol.

Preferably the weight-average molecular weight of the macromolecular sequences (II) having a flexible nature with a glass transition temperature of less than 0°C is between 175 000 and 700 000g/mol, more preferably between 200 000g/mol and 650 000g/mol, and advantageously between 225 000g/mol and 600 000g/mol.

The polydispersity index of the molecular weight Mw/Mn of the macromolecular sequences (II) having a flexible nature or block B is greater than 2, preferably greater than 2.5 and more preferably greater than 3.

The polydispersity index of the molecular weight Mw/Mn is between 2.5 and 10.0, preferably between 3.0 and 10.0, more preferably between 3.0 and 6.0 and even more preferably between 3.0 and 5.0.

**With regard to the inorganic particle P1 according to the invention,** it has a weight average particle size between 1nm and 1µm.

Preferably the weight average particle size of the inorganic particle P1 is more than 5nm, more preferably more than 10nm, still more preferably more than 20nm, again still more preferably more than 30nm, advantageously more than 40nm, even more advantageously more than 50nm and advantageously more than 100nm.

Preferably the weight average particle size of the inorganic particle P1 is less than 950nm, more preferably less than 925nm, still more preferably less than 900nm, again still more preferably less than 875nm, advantageously less than 850nm, even more advantageously less than 800nm and advantageously less than 750nm.

Preferably the weight average particle size of the inorganic particle P1 is between 5nm and 950nm, more preferably between 10nm and 950nm, still more preferably between 20nm and 900nm, again still more preferably between 30nm and 900nm, advantageously between 40nm and 850nm, even more advantageously between 50nm and 800nm and advantageously between 100nm and 750nm.

The inorganic particle P1 comprises either an inorganic compound of the formula (1a)

ABₓC₁₋ₓX₃ (1a)

wherein x is from 0 to 1 and A, B, and C are cations and X is an anion;
or inorganic particle P1 comprises an inorganic compound the formula (1b)

   A'_{1-y}A"_{y}CX₃ (1b)
wherein y is from 0 to 1 and A', A'', and C are cations and X is an anion;
or inorganic particle P1 comprises an inorganic compound the formula (1c)

   A'_{1-y}A"_{y}BₓC₁₋ₓX₃ (1c)
wherein x is from 0 to 1, y is from 0 to 1 and A', A'', B, and C are cations and X is an anion

In one embodiment in formula (1a) and (1c) x is 0 or 1. In another embodiment in formula (1b) and (1c) y is 1 or 0. If x=0 and y=0, the formulas (1a), (1b) and (1c) are simplified to formula ACX₃.

The inorganic compound of the formulas (1a), (1b) and (1c) represents from 50wt% to 100wt% of the inorganic particle P1. Preferably the inorganic compound of the formulas (1a), (1b) and (1c) represents from 60wt% to 100wt% of the inorganic particle P1, more preferably from 70wt% to 100wt%, still more preferably from 75wt% to 100wt%, advantageously from 80wt% to 100wt% and advantageously from 90wt% to 100wt%.

In a first preferred embodiment the X in all formulas (1a), (1b) and (1c) is oxygen O.

The cations A, A' or A" the formulas (1a), (1b) and (1c) are chosen from metal cations and A' is different from A". Preferably A, A' or A" is an alkali metal cation or alkali earth metal cation, more preferably chosen from cations of lithium, sodium, potassium, beryllium, magnesium, calcium, strontium, barium, lanthanum or lead. Still more preferably A, A' or A" is chosen from cations of lithium, sodium, potassium, beryllium, magnesium, calcium, strontium or barium. Advantageously A, A' or A" is chosen from cations of magnesium, calcium, strontium or barium and still more advantageously A, A' or A" is chosen from cations of calcium, strontium or barium

The cation C is chosen from a metal cation of an element of UIPAC groups 3 to 7 of the periodic table of elements or from the lanthanides series of chemical elements. Preferably the cation C is chosen from anions of manganese, niobium, tantalum, titanium, zirconium or ytterbium. More preferably the cation C is chosen from cations of niobium, tantalum, titanium or zirconium.

The cation B is chosen from a metal cation of an element of UIPAC groups 3 to 7 of the periodic table of elements or from the lanthanides series of chemical elements and is different from C. Preferably B is chosen from cations of manganese, niobium, tantalum, titanium, zirconium or ytterbium. More preferably the cation B is chosen from cations of niobium, tantalum, titanium or zirconium.

Examples of compounds of formulas (1a), (1b) and (1c) are LiTaO₃, LiNbO₃, KNbO₃, BaTiO₃, KTaO₃, PbZrO₃, PbZrₓTi₁₋ₓO₃, Ba_{y}Sr_{1-y}TiO₃, SrTiO₃, LaMnO₃, LaMnO₃, La_{y}Ca_{1-y}TiO₃, LaYbO₃ and CaTiO₃.

More preferably, the compound of the formulas (1a), (1b) and (1c) has perovskit structure.

More preferably the cation A, A' or A" in formula (1) has an ionic radii of at least 100pm. Advantageously the cation A, A' or A" in formula (1) has an ionic radii of at least 105pm and more advantageously at least 110pm.

More preferably the cations B and C in formula (1) have an ionic radii of less than 100pm. Advantageously the cations B and C in formula (1) have an ionic radii of less than 95pm and more advantageously less than 90pm.

The ionic radii of the respective ions can be found in encyclopaedias. In a particular first preferred embodiment the inorganic compound of formula (1a) is BaTiO₃.

In a particular second preferred embodiment the compound of formula (1b) is Ba_{1-y}Sr_{y}TiO₃, with 0<y<1.

In a particular third preferred embodiment the compound of formula (1a) is BaZrₓTi₁₋ₓO₃ with 0<x<1.

**With regard to the process for** manufacturing the composition C1 according to the invention it comprises the steps of
a) providing inorganic particles P1
b) incorporating the inorganic particles P1 in the transparent material M1.

Advantageously the process for for manufacturing the composition C1 according to the invention it comprises the steps of
a1) providing inorganic particles P1,
a2) providing the transparent material M1,
b) incorporating the inorganic particles P1 in the transparent material M1.

The respective inorganic particles P1 and the transparent material M1 and their respective embodiments are the same as defined before.

The incorporating step can be made either by blending the inorganic particles P1 with the transparent material M1, or the incorporation step is divided into two substeps, where the inorganic particles P1 are blended with a precursor of the transparent material M1 comprising monomers followed by polymerization.

The composition C1 according to the invention can be used in lightning applications or in an article suitable for lightning applications.

The article can be a light guide.

The composition can for example be used in lightning applications or in an article suitable for lightning applications in form of a sheet, a wedge, a rod or a tube.

The sheet is having a thickness between 0.5mm and 300mm, preferably between 1mm and 200mm.

The wedge is having on its largest thickness between 4mm and 300mm, preferably between 5mm and 200mm.

The rod or the tube is having a diameter between 0.5mm and 300mm.

The sheets manufactured from or with the composition according to the present invention can be used as light guide body or light guide plate, for example as edge lightning.

The light guide body or plate according to the invention preferably has at least a thickness of 0.5 mm. The light guide body or plate according to the invention preferably has at most a thickness of 50 mm. The thickness particularly preferably lies in the range of from 1 to 30 mm and more particularly preferably is from 2 to 25 mm.

The light guide body or plate may, also be assigned further layers, for example mirror or reflection layers.

### [Methods of evaluation]

### Transmission and haze

The luminous transmittance (transmission) and haze is measured on the respective sheets according to the standard ASTM D1003.

### Molecular Weight

The mass average molecular weight (Mw) of the polymers is measured with by size exclusion chromatography (SEC).

### Particle size analysis

The particle size of the scattering particles is measured with scanning electron microscopy (SEM). At least 50 particles are counted. The diameter of the particle size is the one of the circle filling the same area as the 2D image projection of the particle. The weight average particle size is calculated.

### [Examples]

As PMMA a copolymer of methyl methacrylate as injection molding grade is used, having a melt flow index of 8g/10min.

Comparative example 1: the used TiO₂ particles have a weight average particle diameter of about 500nm.

Example 1: The used BaTiO₃ particles have a weight average particle diameter of about 500nm.

The respective particles were provided and incorporated in the PMMA matrix. Followed is the preparation of a sheet of 3mmm thickness by injection molding of the PMMA with 20ppm by weight and 100ppm by weight of the respective particles.

The luminous transmittance (transmission) and haze is measured on the respective sheets according to the standard ASTM D1003. A haze-gard plus apparatus from BYK-Gardner is used.

**Table 1 - results**

| Example | Transmission (visible) | Haze |
|---|---|---|
| | [%] | [%] |
| Comparative Example 1 | 83 | 15.6 |
| Example 1 | 89 | 6.08 |

As shown in table 1 the transmission of the composition according to the invention is higher, while the haze is lower.

The transmission is also measured as function of the wavelength λ in the visible light for both concentrations of particle loadings.

**Table 2 - transmission at 20ppm particles as function of wavelength λ**

| | Transmission [%] | |
|---|---|---|
| Wavelength λ [nm] | Comparative Example 1 | Example 1 |
| 380 | 80 | 87 |
| 400 | 81 | 88 |
| 450 | 81 | 89 |
| 500 | 82 | 89 |
| 550 | 82 | 89 |
| 600 | 83 | 89 |
| 650 | 83 | 89 |
| 700 | 84 | 89 |
| 750 | 85 | 89 |
| 800 | 85 | 89 |

**Table 3 - transmission at 100ppm particles as function of wavelength λ**

| | Transmission [%] | |
|---|---|---|
| Wavelength λ [nm] | Comparative Example 1 | Example 1 |
| 380 | 50 | 80 |
| 400 | 55 | 80 |
| 450 | 57 | 80 |
| 500 | 57 | 80 |
| 550 | 58 | 80 |
| 600 | 59 | 80 |
| 650 | 61 | 80 |
| 700 | 62 | 80 |
| 750 | 64 | 80 |
| 800 | 65 | 80 |

Table 2 and 3 show a higher light transmission that is much less independent of the wavelength for the composition according to the invention.

## Claims

1. A composition C1 comprising:
a) a transparent material M1 and,
b) inorganic particles P1 comprising an inorganic compound either of the formula ABₓC₁₋ₓX₃, wherein x is from 0 to 1 and A, B, and C are cations and X is an anion; or inorganic particles P1 comprising an inorganic compound of the formula A'_{1-y}A"_{y}CX₃ , wherein y is from 0 to 1 and A', A", and C are cations and X is an anion; or inorganic particles P1 comprising an inorganic compound of the formula A'_{1-y}A"_{y}BₓC₁₋ₓX₃ , wherein x is from 0 to 1, y is from 0 to 1 and A', A", B, and C are cations and X is an anion; said particles are having a weight average particle diameter between 1nm and 1µm, the measuring method being disclosed in the description,
wherein the composition C1 comprises between 0.1ppm and 100ppm by weight of the inorganic particles P1 in the composition C1 calculated on the components a) and b).

2. The composition C1 according to claim 1, **characterized in that** the transparent material M1 is a transparent polymer P1.

3. The composition C1 according to any of claims 1 to 2, **characterized in that** the transparent material M1 is a transparent polymer P1 chosen from (meth) acrylic polymers, polycarbonate, polystyrenes, polyesters, polyvinylchloride (PCV), cyclic olefin copolymers, styrene methyl methacrylate (SMMA), styrene acrylonitrile (SAN), polyvinyliden fluoride (PVDF) and blends thereof.

4. The composition C1 according to claim 1, **characterized in that** the transparent material M1 is a transparent polymer P1 composition comprising at least 50wt% of a (meth)acrylic polymer composition MPCo.

5. The composition C1 according any of claims 1 to 4, **characterized in that** the inorganic particle P1 comprises an inorganic compound of the formula ABₓC₁₋ₓX₃, wherein x is from 0 to 1 and A, B, and C are cations and X is an anion.

6. The composition C1 according to any of claims 1 to 4, characterized that the inorganic particle P1 comprises an inorganic compound of the formula A'_{1-y}A"_{y}CX₃, wherein y is from 0 to 1 and A', A", and C are cations and X is an anion.

7. The composition C1 according to any of claims 1 to 4 **characterized in that** the inorganic particle P1 comprises an inorganic compound of the formula A'_{1-y}A"_{y}BₓC₁₋ₓX₃, wherein x is from 0 to 1, y is from 0 to 1 and A', A", B, and C are cations and X is an anion.

8. The composition C1 according to any of claims 1 to 7, **characterized in that** X in all formulas is oxygen O.

9. The composition C1 according to any of claims 1 to 7, **characterized in that** A, A' or A" in the formulas are chosen from metal cations and A' is different from A" and preferably chosen from cations of lithium, sodium, potassium, beryllium, magnesium, calcium, strontium, barium, lanthanum or lead.

10. The composition C1 according to any of claims 1 to 7, **characterized in that** the cation C is chosen from cations of manganese, niobium, tantalum, titanium, zirconium or ytterbium.

11. The composition C1 according to any of claims 1 to 7, **characterized in that** the cation B is chosen from cations of manganese, niobium, tantalum, titanium, zirconium or ytterbium.

12. The composition C1 according to any of claims 1 to 7, **characterized in that** the inorganic compound is chosen from LiTaO₃, LiNbO₃, KNbO₃, BaTiO₃, KTaO₃, PbZrO₃, PbZrₓTi₁₋ₓO₃, Ba_{y}Sr_{1-y}TiO₃, SrTiO₃, LaMnO₃, LaMnO₃, La_{y}Ca_{1-y}TiO₃, LaYbO₃ and CaTiO₃.

13. The composition C1 according to any of claims 1 to 7, **characterized in that** the inorganic compound is BaTiO₃ or Ba_{1-y}Sr_{y}TiO₃ or BaZrₓTi₁₋ₓO₃.

14. A Process for the preparation of a composition C1 according to any of claims 1 to 13, characterized that said process comprises the steps of
a) providing inorganic particles P1
b) incorporating the inorganic particles P1 in the transparent material M1.

15. The process according to claim 14, **characterized in that** incorporating step is made divided into two substeps, where the inorganic particles P1 are blended with a precursor of the transparent material M1 comprising monomers followed by polymerization.

16. Use of a composition C1 according to any of claims 1 to 13 in lightning applications.

17. Use of a composition C1 according to any of claims 1 to 13 in a light guide.

18. A process for manufacturing an article for lightning applications comprising the steps of
a) providing a composition C1 according to any of claims 1 to 13,
b) transforming the composition C1.

19. An article comprising a composition C1 according to any of claims 1 to 13 or made by a process according to any of claims 14 to 15.

20. The article according to claim 19 **characterized in that** the article is a light guide.

21. The article according to claim 19, **characterized in that** article is in form in form of a sheet, a wedge, a rod or a tube.

## Patentansprüche

1. Zusammensetzung C1, umfassend:
a) ein transparentes Material M1 und
b) anorganische Partikel P1, die eine anorganische Verbindung entweder der Formel ABₓC₁₋ₓX₃ umfassen, wobei x von 0 bis 1 ist und A, B und C Kationen sind und X ein Anion ist; oder anorganische Partikel P1, die eine anorganische Verbindung der Formel A'_{1-y} A"_{y}CX₃ umfassen, wobei y von 0 bis 1 ist und A', A" und C Kationen sind und X ein Anion ist; oder anorganische Partikel P1, die eine anorganische Verbindung der Formel A'_{1-y}A"_{y}BₓC₁₋ₓX₃ umfassen, wobei x von 0 bis 1 ist, y von 0 bis 1 ist und A', A", B und C Kationen sind und X ein Anion ist; wobei die Partikel einen gewichtsmittleren Partikeldurchmesser zwischen 1 nm und 1 µm aufweisen, wobei das Messverfahren in der Beschreibung offenbart ist,
wobei die Zusammensetzung C1 zwischen 0,1 ppm und 100 ppm, bezogen auf das Gewicht der anorganischen Partikel P1 in der Zusammensetzung C1, berechnet auf die Komponenten a) und b), umfasst.

2. Zusammensetzung C1 gemäß Anspruch 1, **dadurch gekennzeichnet, dass** das transparente Material M1 ein transparentes Polymer P1 ist.

3. Zusammensetzung C1 gemäß einem der Ansprüche 1 bis 2, **dadurch gekennzeichnet, dass** das transparente Material M1 ein transparentes Polymer P1 ist, das aus (Meth)acrylpolymeren, Polycarbonat, Polystyrolen, Polyestern, Polyvinylchlorid (PVC), cyclischen Olefincopolymeren, Styrolmethylmethacrylat (SMMA), Styrolacrylnitril (SAN), Polyvinylidenfluorid (PVDF) und Mischungen davon ausgewählt ist.

4. Zusammensetzung C1 gemäß Anspruch 1, **dadurch gekennzeichnet, dass** das transparente Material M1 eine transparente Polymerzusammensetzung P1 ist, die mindestens 50 Gew.-% einer (Meth)acrylpolymerzusammensetzung MPCo umfasst.

5. Zusammensetzung C1 gemäß einem der Ansprüche 1 bis 4, **dadurch gekennzeichnet, dass** das anorganische Partikel P1 eine anorganische Verbindung, der Formel ABₓC₁₋ₓX₃, wobei x von 0 bis 1 ist und A, B und C Kationen sind und X ein Anion ist.

6. Zusammensetzung C1 gemäß einem der Ansprüche 1 bis 4, **dadurch gekennzeichnet, dass** das anorganische Partikel P1 eine anorganische Verbindung der Formel A'_{1-y}A"_{y}CX₃ umfasst, wobei y von 0 bis 1 ist und A', A" und C Kationen und X ein Anion sind.

7. Zusammensetzung C1 gemäß einem der Ansprüche 1 bis 4, **dadurch gekennzeichnet, dass** das anorganische Partikel P1 eine anorganische Verbindung der Formel A'_{1-y}A"_{y}BₓC₁₋ₓX₃ umfasst, wobei x von 0 bis 1 ist, y von 0 bis 1 ist und A', A", B und C Kationen sind und X ein Anion ist.

8. Zusammensetzung C1 gemäß einem der Ansprüche 1 bis 7, **dadurch gekennzeichnet, dass** X in allen Formeln Sauerstoff O ist.

9. Zusammensetzung C1 gemäß einem der Ansprüche 1 bis 7, **dadurch gekennzeichnet, dass** A, A' oder A" in den Formeln aus Metallkationen ausgewählt sind und A' sich von A" unterscheidet und vorzugsweise aus Kationen von Lithium, Natrium, Kalium, Beryllium, Magnesium, Calcium, Strontium, Barium, Lanthan oder Blei ausgewählt ist.

10. Zusammensetzung C1 gemäß einem der Ansprüche 1 bis 7, **dadurch gekennzeichnet, dass** das Kation C aus Kationen von Mangan, Niob, Tantal, Titan, Zirkonium oder Ytterbium ausgewählt ist.

11. Zusammensetzung C1 gemäß einem der Ansprüche 1 bis 7, **dadurch gekennzeichnet, dass** das Kation B aus Kationen von Mangan, Niob, Tantal, Titan, Zirkonium oder Ytterbium ausgewählt ist.

12. Zusammensetzung C1 gemäß einem der Ansprüche 1 bis 7, **dadurch gekennzeichnet, dass** die anorganische Verbindung ausgewählt ist aus LiTaO₃, LiNbO₃, KNbO₃, BaTiO₃, KTaO₃, PbZrO₃, PbZrₓTi₁₋ₓO₃, Ba_{y}Sr_{1-y}TiO₃, SrTiO₃, LaMnO₃, LaMnO₃, La_{y}Ca_{1-y}TiO₃, LaYbO₃ und CaTiO₃.

13. Zusammensetzung C1 gemäß einem der Ansprüche 1 bis 7, **dadurch gekennzeichnet, dass** die anorganische Verbindung BaTiO₃ oder Ba_{1-y}Sr_{y}TiO₃ oder BaZrₓTi₁₋ₓO₃.

14. Verfahren zur Herstellung einer Zusammensetzung C1 gemäß einem der Ansprüche 1 bis 13, **dadurch gekennzeichnet, dass** das Verfahren die folgenden Schritte umfasst
a) Bereitstellen von anorganischen Partikeln P1
b) Einarbeiten der anorganischen Partikel P1 in das transparente Material M1.

15. Verfahren nach Anspruch 14, **dadurch gekennzeichnet, dass** der Einarbeitungsschritt in zwei Teilschritte unterteilt ist, wobei die anorganischen Partikel P1 mit einem Precursor des transparenten Materials M1, das Monomere umfasst, gemischt werden, gefolgt von einer Polymerisation.

16. Verwendung einer Zusammensetzung C1 gemäß einem der Ansprüche 1 bis 13 in Beleuchtungsanwendungen.

17. Verwendung einer Zusammensetzung C1 gemäß einem der Ansprüche 1 bis 13 in einem Lichtleiter.

18. Verfahren zur Herstellung eines Artikels für Beleuchtungsanwendungen, umfassend die Schritte
a) Bereitstellen einer Zusammensetzung C1 gemäß einem der Ansprüche 1 bis 13,
b) Umformen der Zusammensetzung C1.

19. Gegenstand, der eine Zusammensetzung C1 gemäß einem der Ansprüche 1 bis 13 umfasst oder durch ein Verfahren gemäß einem der Ansprüche 14 bis 15 hergestellt ist.

20. Gegenstand gemäß Anspruch 19, **dadurch gekennzeichnet, dass** der Gegenstand ein Lichtleiter ist.

21. Gegenstand gemäß Anspruch 19, **dadurch gekennzeichnet, dass** der Gegenstand in Form einer Platte, eines Keils, eines Stabes oder eines Rohrs ist.

## Revendications

1. Composition C1 comprenant :
a) un matériau transparent M1, et
b) des particules inorganiques P1 comprenant un composé inorganique répondant à la formule ABₓC₁₋ₓX₃, où x vaut de 0 à 1 et A, B et C sont des cations et X est un anion ; ou des particules inorganiques P1 comprenant un composé inorganique répondant à la formule A'_{1-y}A"_{y}CX₃, où y vaut de 0 à 1 et A', A" et C sont des cations et X est un anion ; ou des particules inorganiques P1 comprenant un composé inorganique répondant à la formule A'_{1-y}A"_{y}BₓC₁₋ₓX₃, où x vaut de 0 à 1, y vaut de 0 à 1 et A', A", B et C sont des cations et X est un anion ; lesdites particules ayant un diamètre moyen en poids compris entre 1 nm et 1 µm, la méthode de mesure étant décrite dans la description,
la composition C1 comprenant entre 0,1 ppm et 100 ppm en poids de particules inorganiques P1 dans la composition C1 d'après un calcul effectué sur les composants a) et b).

2. Composition C1 selon la revendication 1, **caractérisée en ce que** le matériau transparent M1 est un polymère transparent P1.

3. Composition C1 selon l'une quelconque des revendications 1 à 2, **caractérisée en ce que** le matériau transparent M1 est un polymère transparent P1 choisi parmi les polymères (méth)acryliques, le polycarbonate, les polystyrènes, les polyesters, le polychlorure de vinyle (PVC), les copolymères d'oléfines cycliques, le styrène-méthacrylate de méthyle (SMMA), le styrène acrylonitrile (SAN), le polyfluorure de vinylidène (PVDF) et les mélanges de ceux-ci.

4. Composition C1 selon la revendication 1, **caractérisée en ce que** le matériau transparent M1 est une composition de polymère transparent P1 comprenant au moins 50 % en poids d'une composition de polymère (méth)acrylique MPCo

5. Composition C1 selon l'une quelconque des revendications 1 à 4, **caractérisée en ce que** la particule inorganique P1 comprend un composé inorganique de formule ABₓC₁₋ₓX₃, où x vaut de 0 à 1 et A, B et C sont des cations et X est un anion.

6. Composition C1 selon l'une quelconque des revendications 1 à 4, **caractérisée en ce que** la particule inorganique P1 comprend un composé inorganique de formule A'_{1-y}A"_{y}CX₃, où y vaut de 0 à 1 et A', A" et C sont des cations et X est un anion.

7. Composition C1 selon l'une quelconque des revendications 1 à 4, **caractérisée en ce que** la particule inorganique P1 comprend un composé inorganique de formule A'_{1-y}A"_{y}BₓC₁₋ₓX₃, où x vaut de 0 à 1, y vaut de 0 à 1 et A', A", B et C sont des cations et X est un anion.

8. Composition C1 selon l'une quelconque des revendications 1 à 7, **caractérisée en ce que** X, dans toutes les formules, représente l'oxygène O.

9. Composition C1 selon l'une quelconque des revendications 1 à 7, **caractérisée en ce que** A, A' ou A", dans les formules, sont choisis parmi des cations métalliques et A' est différent de A" et est de préférence choisi parmi les cations de lithium, sodium, potassium, béryllium, magnésium, calcium, strontium, baryum, lanthane ou plomb.

10. Composition C1 selon l'une quelconque des revendications 1 à 7, **caractérisée en ce que** le cation C est choisi parmi les cations de manganèse, niobium, tantale, titane, zirconium ou ytterbium.

11. Composition C1 selon l'une quelconque des revendications 1 à 7, **caractérisée en ce que** le cation B est choisi parmi les cations de manganèse, niobium, tantale, titane, zirconium ou ytterbium.

12. Composition C1 selon l'une quelconque des revendications 1 à 7, **caractérisée en ce que** le composé inorganique est choisi parmi LiTaO₃, LiNbO₃, KNbO₃, BaTiO₃, KTaO₃, PbZrO₃, PbZrₓTi₁₋ₓO₃, Ba_{y}Sr_{1-y}TiO₃, SrTiO₃, LaMnO₃, LaMnO₃, La_{y}Ca_{1-y}TiO₃, LaYbO₃ et CaTiO₃.

13. Composition C1 selon l'une quelconque des revendications 1 à 7, **caractérisée en ce que** le composé inorganique est BaTiO₃ ou Ba_{1-y}Sr_{y}TiO₃ ou BaZrₓTi₁₋ₓO₃.

14. Procédé de préparation d'une composition C1 selon l'une quelconque des revendications 1 à 13, **caractérisé en ce que** ledit procédé comprend les étapes suivantes consistant à
a) fournir des particules inorganiques P1
b) incorporer les particules inorganiques P1 dans le matériau transparent M1.

15. Procédé selon la revendication 14, **caractérisé en ce que** l'étape d'incorporation est divisée en deux sous-étapes, dans lesquelles les particules inorganiques P1 sont mélangées à un précurseur du matériau transparent M1 comprenant des monomères, avant une polymérisation.

16. Utilisation d'une composition C1 selon l'une quelconque des revendications 1 à 13 dans des applications d'éclairage.

17. Utilisation de la composition C1 selon l'une quelconque des revendications 1 à 13 dans un guide de lumière.

18. Procédé de fabrication d'un article pour des applications d'éclairage comprenant les étapes suivantes consistant à
a) fournir une composition C1 selon l'une quelconque des revendications 1 à 13,
b) transformer la composition C1.

19. Article comprenant une composition C1 selon l'une quelconque des revendications 1 à 13 ou obtenu suivant un procédé selon l'une quelconque des revendications 14 et 15.

20. Article selon la revendication 19, **caractérisé en ce que** l'article est un guide de lumière.

21. Article selon la revendication 19, **caractérisé en ce que** l'article est sous la forme d'une feuille, d'un coin, d'une tige ou d'un tube.
